# EUROPEAN PATENT APPLICATION

(11) **EP 2 348 609 A2**
(43) Date of publication of application: **27.07.2011**
(21) Application number: 10195114.3
(22) Date of filing: 15.12.2010
(51) Int. Cl.: H02J 17/00

(54) **Power supplying apparatus, power receiving apparatus and wireless power supplying system**

(30) Priority: 21.01.2010 JP 2010011128
(71) Applicant: Sony Corporation, Tokyo 108-0075 (JP)
(72) Inventor: Komiyama, Shinji, Minato-ku Tokyo 108-0075 (JP)
(74) Representative: Turner, James Arthur

(57) **Abstract**

A power supplying apparatus (20) includes: a power generation section (22) adapted to generate power to be supplied; a power supplying element (211) adapted to receive the power generated by and supplied thereto from the power generation section; and a plurality of resonance elements (212-1,212-2) disposed at multiple stages and adapted to couple to each other through a magnetic field resonance relationship; one of the resonance elements being coupled to the power supplying element through electromagnetic induction.

## Description

This invention relates to a power supplying apparatus, a power receiving apparatus and a wireless power supplying system, for example of the contactless power supplying type wherein power is supplied and received in a contactless or wireless fashion.

An electromagnetic induction system is known as a system of supplying electric power in a wireless fashion.

Further, in recent years, attention has been and is paid to a wireless power supplying system and a wireless charging system in which a method called magnetic field resonance method which utilizes an electromagnetic resonance phenomenon is used.

In a contactless power supplying system of the electromagnetic induction type which is used most widely at present, it is necessary for a power supply source and a power supply destination, which is the power reception side, to commonly use magnetic fluxes. Therefore, in order to transmit power efficiently, it is necessary to dispose the power supply source and the power supply destination very closely to each other, and also alignment for coupling is significant.

Meanwhile, a contactless power supplying system which utilizes an electromagnetic resonance phenomenon is advantageous in that, from the principle of the electromagnetic resonance phenomenon, power can be transmitted over a greater distance than that by the electromagnetic induction system and besides, even if the alignment is somewhat rough, the transmission efficiency does not drop very much.

It is to be noted that, as the electromagnetic resonance phenomenon, not only magnetic field resonance but also electric field resonance are available.

A wireless power supplying system which adopts the magnetic field resonance system is disclosed, for example, in Japanese Patent Laid-Open No. 2001-185939 (hereinafter referred to as Patent Document 1).

In the wireless power supplying system of Patent Document 1, electric power is transmitted from a power supply coil which is connected to the power supplying circuit to a resonance coil by electromagnetic induction. The frequency of the power to be transmitted is adjusted by means of a capacitor and a resistor connected to the resonance coil.

In recent years, a wireless power transmission technique has been reported which implements transmission of power of 60 W over a distance of 2 m by adopting the magnetic field resonance system which utilizes a resonance phenomenon of a magnetic field.

Further, development of a "wireless power supplying system" of a high efficiency has been reported which transmits power of 60 W to drive an electronic apparatus at a place spaced by 50 cm by adopting the magnetic field resonance system.

As described hereinabove, the wireless power supply or power transmission system of the magnetic field resonance type is similar to the electromagnetic induction system in that power is transmitted through a magnetic field. However, the magnetic field resonance system can achieve transmission over a transmission distance of approximately 10 times in comparison with that by the electromagnetic induction system through utilization of the resonance phenomenon.

However, in order to achieve such a high performance, an excellent resonator, or in other words, a resonator having a high Q value, is demanded.

That the Q value is high signifies that the frequency characteristic is sharp, and this has a tradeoff relationship with the bandwidth. Then, the narrow bandwidth is related to the following drawbacks.
1) If the frequency of the carrier is displaced, then the transmission efficiency drops significantly.
2) If the resonance frequency is displaced by a variation of the surrounding situation or a temperature variation, then the transmission efficiency drops significantly.
3) Power cannot be transmitted with any other frequency than the resonance point.

In order to transmit power with a frequency other than the resonance frequency set in advance, it is necessary to change the resonance frequency. Therefore, it is necessary to vary the setting of some constant.

This gives rise to mechanical complication and deterioration of an electric characteristic such as a drop of the Q value of the resonator.
4) Also it is possible to modulate a carrier for power transmission to superpose data on the carrier. In this instance, since, in phase modulation and frequency modulation which have a high noise resisting property, the transfer rate of data and the occupied bandwidth have a proportional relationship to each other, if the transmission bandwidth is narrow, then it is difficult to carry out high speed data transmission.

As described above, the power transmission system of the magnetic field resonance type basically includes two resonators, and depending upon conditions, a wide bandwidth can be obtained in comparison with a frequency characteristic solely of each of the resonators. However, as an essence of the magnetic field resonance type power transmission system, it is necessary for each of the resonators to have a high Q value, and a greater bandwidth is desired.

Therefore, it is desirable to provide a power supplying apparatus, a power receiving apparatus and a wireless power supplying system of the magnetic field resonance type which can achieve a frequency characteristic of a greater bandwidth.

Various respective aspects and features of the invention are defined in the appended claims. Combinations of features from the dependent claims may be combined with features of the independent claims as appropriate and not merely as explicitly set out in the claims.

According to an embodiment of the present invention, there is provided a power supplying apparatus including a power generation section adapted to generate power to be supplied, a power supplying element adapted to receive the power generated by and supplied thereto from the power generation section, and a plurality of resonance elements disposed at multiple stages and adapted to couple to each other through a magnetic field resonance relationship, one of the resonance elements being coupled to the power supplying element through electromagnetic induction.

According to another embodiment of the present invention, there is provided a power receiving apparatus including a plurality of resonance elements disposed at multiple stages and adapted to couple to each other through a magnetic field resonance relationship, and a power supplying element adapted to couple to the resonance elements through electromagnetic induction and receive received power from the resonance elements, one of the resonance elements receiving power transmitted thereto through a magnetic field resonance relationship while another one of the resonance elements is coupled to the power supplying element through electromagnetic induction.

According to a further embodiment of the present invention, there is provided a wireless power supplying system including a power supplying apparatus, and a power receiving apparatus adapted to receive a transmission signal including power transmitted thereto from the power supplying apparatus through a magnetic field resonance relationship, the power supplying apparatus including a power generation section adapted to generate power to be supplied, a power supplying element adapted to receive the power generated by and supplied thereto from the power generation section, and at least one resonance element adapted to couple to the power supplying element through electromagnetic induction, the power receiving apparatus including a resonance element adapted to receive power transmitted from the power supplying apparatus through a magnetic field resonance relationship, and a power supplying element adapted to couple to the resonance elements through electromagnetic induction and receive received power from the resonance element, at least one of the power supplying apparatus and the power reception apparatus including a plurality of resonance elements disposed at multiple stages and coupled to each other through a magnetic field resonance relationship.

With the power supplying apparatus, power receiving apparatus and wireless power supplying system, while the magnetic field resonance system is employed, a frequency characteristic of a greater wideband can be obtained.

Embodiments of the invention will now be described with reference to the accompanying drawings, throughout which like parts are referred to by like references, and in which:
FIG. 1 is a block diagram showing an example of a configuration of a wireless power supplying system according to a first embodiment of the present invention;
FIG. 2 is a schematic view illustrating equivalent blocks of the 5 wireless power supplying system of FIG. 1;
FIG. 3 is a circuit diagram showing an equivalent circuit of the wireless power supplying system of FIG. 1;
FIGS. 4A and 4B are diagrams illustrating values of results of a simulation of a frequency characteristic where constants of a circuit including a coupling degree in the circuit of FIG. 3 are designed appropriately;
FIGS. 5A and 5B are diagrams illustrating actually measured values of a frequency characteristic where constants of a circuit including a coupling degree in the circuit of FIG. 3 are designed appropriately;
FIG. 6 is a block diagram showing an example of a configuration of a wireless power supplying system according to a second embodiment of the present invention;
FIG. 7 is a block diagram showing an example of a configuration of a wireless power supplying system according to a third embodiment of the present invention;
FIG. 8 is a schematic view illustrating equivalent blocks of the wireless power supplying system of FIG. 7; and
FIG. 9 is a circuit diagram showing an equivalent circuit of the wireless power supplying system of FIG. 7.

In the following, preferred embodiments of the present invention are described with reference to the accompanying drawings.

It is to be noted that the description is given in the following order:
1. First Embodiment (first configuration example of the wireless power supplying system)
2. Second Embodiment (second configuration example of the wireless power supplying system)
3. Third Embodiment (third configuration example of the wireless power supplying system)

### <1. First Embodiment>

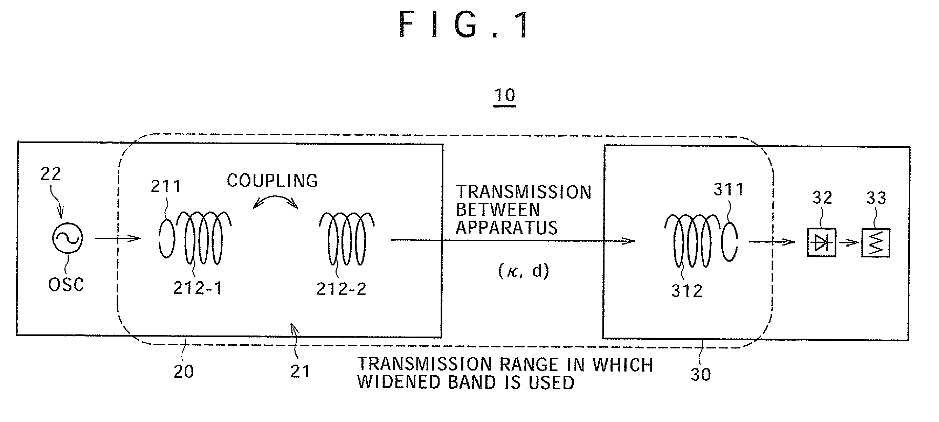

FIG. 1 shows an example of a configuration of a wireless power supplying system according to a first embodiment of the present invention.

Referring to FIG. 1, the wireless power supplying system 10 includes a power supplying apparatus 20 and a power receiving apparatus 30.

The power supplying apparatus 20 includes a power transmission coil section 21, and a high frequency power generation section 22 including an oscillator OSC.

The power transmission coil section 21 includes a power supplying coil 211 as a power supplying element, and a plurality of resonance coils 212-1 and 212-2 as resonance elements coupled to each other at multistage.

It is to be noted that, while, in the present embodiment, the number of resonance coils coupled at multiple stages is two, also it is possible to increase the number of stages of resonance coils to be coupled.

Although a resonance coil is also called consonance coil, in the description of the present embodiment, the term resonance coil is used.

The power supplying coil 211 is formed from a loop coil to which, for example, alternating, that is, AC, current is supplied.

The resonance coil 212-1 functions as a resonator TX1, is formed from an air-core coil which couples with the power supplying coil 211 through electromagnetic induction, and efficiently transmit an AC power wirelessly which is supplied from the power supplying coil 211.

It is to be noted that, on the power supply side, the power supplying coil 211 and the resonance coil 212-1 are coupled to each other strongly by electromagnetic induction.

The resonance coil 212-1 and the resonance coil 212-2 can couple to each other through a magnetic field resonance relationship, and the resonance coil 212-2 functions as a resonator MX1 at an intermediate stage.

The resonance coil 212-2 is formed from an air-core coil similarly to the resonance coil 212-1, and when the self resonance frequencies of the resonance coil 212-2 and a resonance coil 312 of the power receiving apparatus 30 substantially coincide with each other, a magnetic field resonance relationship in which power is transmitted efficiently is established between the resonance coil 212-2 and the resonance coil 312.

The high frequency power generation section 22 generates high frequency power, that is, AC power, for wireless power transmission.

The high frequency power generated by the high frequency power generation section 22 is supplied or applied to the power supplying coil 211 of the power transmission coil section 21.

The power receiving apparatus 30 includes a power receiving coil section 31, a rectification circuit 32 and a load 33 which is a supplying destination of received power.

The power receiving coil section 31 includes a power supplying coil 311 as a power supplying element, and a resonance coil 312 as a resonance element.

The power supplying coil 311 is supplied with AC current from the resonance coil 312 by electromagnetic induction.

The resonance coil 312 is formed from an air-core coil coupled to the power supplying coil 311 by electromagnetic induction, and when the self resonance frequencies of the resonance coil 312 and the resonance coil 212-2 of the power supplying apparatus 20 substantially coincide with each other, a magnetic field resonance relationship is established in which power is received efficiently.

The resonance coil 312 functions as a power receiving side resonator RX1.

It is to be noted that a matching circuit not shown which has an impedance matching function at a load end of the power supplying coil 311 is disposed.

The rectification circuit 32 rectifies received AC power into DC (direct current) power. A voltage stabilization circuit not shown converts the DC power supplied from the rectification circuit 32 into a DC voltage conforming to specifications of the electronic apparatus of the supplying destination of the DC power, and the stabilized DC voltage is supplied to a processing system of the electronic apparatus of the load 33.

Now, general operation of the wireless power supplying system 10 is described.

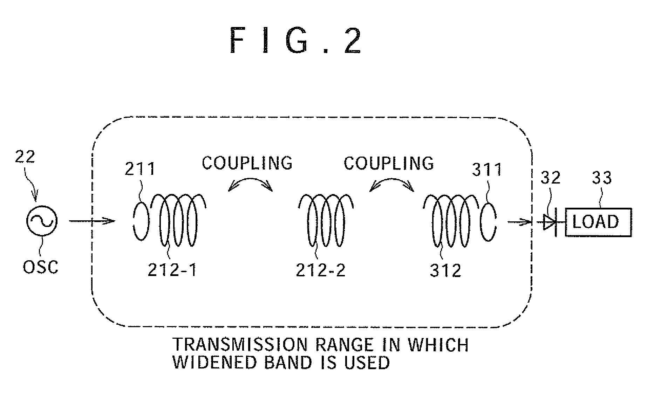

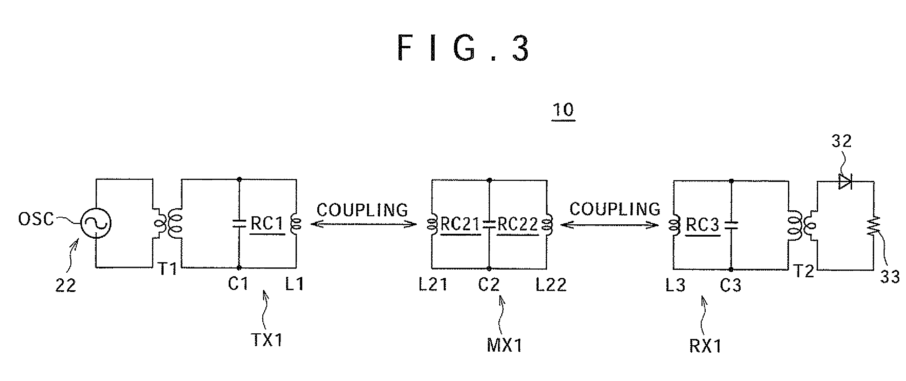

FIG. 2 illustrates equivalent blocks of the wireless power supplying system of FIG. 1, and FIG. 3 shows an equivalent circuit of the wireless power supplying system of FIG. 1.

Referring to FIGS. 2 and 3, the power supplying side resonator TX1 includes a resonance circuit RC1 formed from a coil L1 and floating capacitance of the coil L1 or from the coil L1 and a capacitor C1 connected in parallel to the coil L1.

Similarly, the resonator MX1 at an intermediate stage includes a first resonance circuit RC21 formed equivalently from a coil L21 and floating capacitance of the coil L21 or from the coil L21 and a capacitor C2 connected in parallel to the coil L21.

Further, the resonator MX1 at the intermediate stage includes a second resonance circuit RC22 formed equivalently from a coil L22 and floating capacitance of the coil L22 or from the coil L22 and the capacitor C2 connected in parallel to the coil L22.

The power receiving side resonator RX1 includes a resonance circuit RC3 formed from a coil L3 and floating capacitance of the coil L3 or from the coil L3 and a capacitor C3 connected in parallel to the coil L3.

In this manner, the wireless power supplying system 10 according to the present first embodiment is configured including the three resonators TX1, MX1 and RX1.

On the power supplying apparatus 20 side, AC power generated by the oscillator OSC of the high frequency power generation section 22 is supplied to the power supplying coil 211 and then transmitted to the resonance coil 212-1 through the power supplying coil 211 by coupling by electromagnetic induction.

The resonance coil 212-1 and the resonance coil 212-2 are coupled to each other in a magnetic field resonance relationship such that power of the resonance coil 212-1 is supplied to the resonance coil 212-2.

In this instance, since the power supplying side resonator TX1 and the power supplying or coupling coil 211. are coupled in induction coupling, they function as a transformer T1 simultaneously with transmission of a signal to carry out impedance conversion or transformer operation.

The power supplying or coupling coil 211 is connected to an output of the oscillator OSC such that it is driven by the oscillator OSC to excite the power supplying side resonator TX1.

An induced magnetic field formed by the coil is generated around the excited power supplying side resonator TX1, and the resonator MX1 disposed adjacent the next stage, that is, adjacent the intermediate stage, picks up the induced magnetic field. Consequently, energy is transmitted.

Consequently, the resonator MX1 at the intermediate stage is excited, and an induced magnetic field formed from the coil is generated around the resonator MX1.

Since the power receiving side resonator RX1 on the power reception side is disposed in the neighborhood of the resonator MX1 at the intermediate state, for example, at a distance of several tens cm to the resonator MX1, the induced magnetic field is picked up by the power receiving apparatus 30. Consequently, energy is transmitted.

The power excited in the power receiving side resonator RX1 is transmitted to the power supplying or coupling coil 311 similarly as in the power supplying apparatus 20. Consequently, high frequency power is finally converted into DC power by the rectification circuit 32.

By inserting the resonator MX1 at an intermediate stage between the power supplying side resonator TX1 of the power supplying apparatus 20 and the power receiving side resonator RX1 of the power receiving apparatus 30 to allow multi-state transmission, the frequency band can be adjusted, and by carrying out suitable design, a wideband can be anticipated.

In the wireless power supplying system 10 according to the present first embodiment, the resonator MX1 at the intermediate stage is disposed on the power supplying apparatus 20 side.

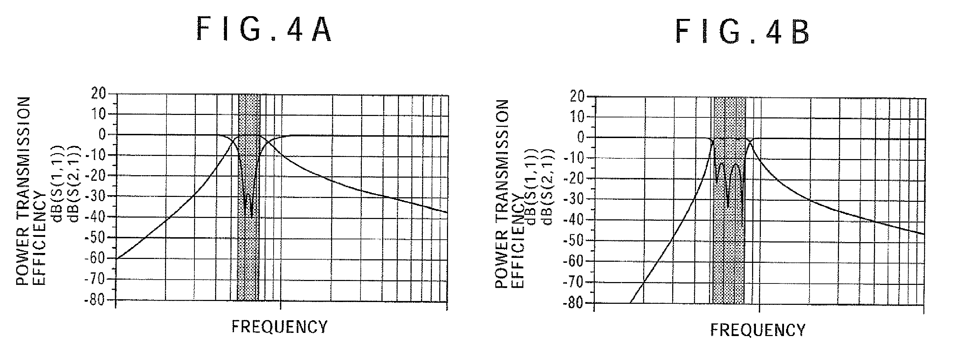

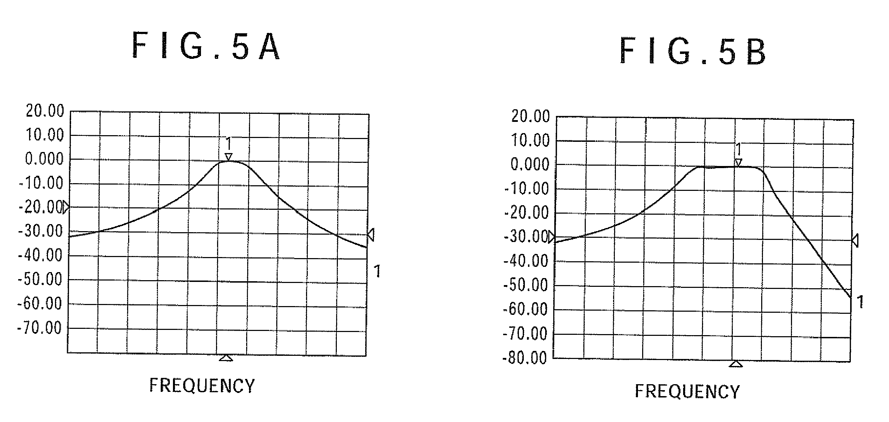

FIGS. 4A and 4B illustrate values of results of a simulation of a frequency characteristic where constants of the circuit including a coupling degree κ in the circuit of FIG. 3 are designed appropriately. Meanwhile, FIGS. 5A and 5B illustrate actually measured values of a frequency characteristic where constants of the circuit including a coupling degree κ in the circuit of FIG. 3 are designed appropriately.

In particular, FIGS. 4A and 5A illustrate frequency characteristic of an ordinary magnetic field resonance type wireless power supplying system as a comparative example which includes two resonators. Meanwhile, FIGS. 4B and 5B illustrate frequency characteristic of the magnetic field resonance type wireless power supplying system according to the present embodiment.

It is to be noted that the actually measured values of FIGS. 5A and 5B are results of experiments conducted with different frequencies.

In FIGS. 4A to 5B, the axis of abscissa indicates the frequency and the axis of ordinate indicates the power transmission efficiency.

As can be recognize from FIGS. 4A to 5B, the wireless power supply system of the magnetic field resonance type according to the present embodiment can increase the transmission bandwidth in comparison with an ordinary wireless power supplying system.

### <2. Second Embodiment

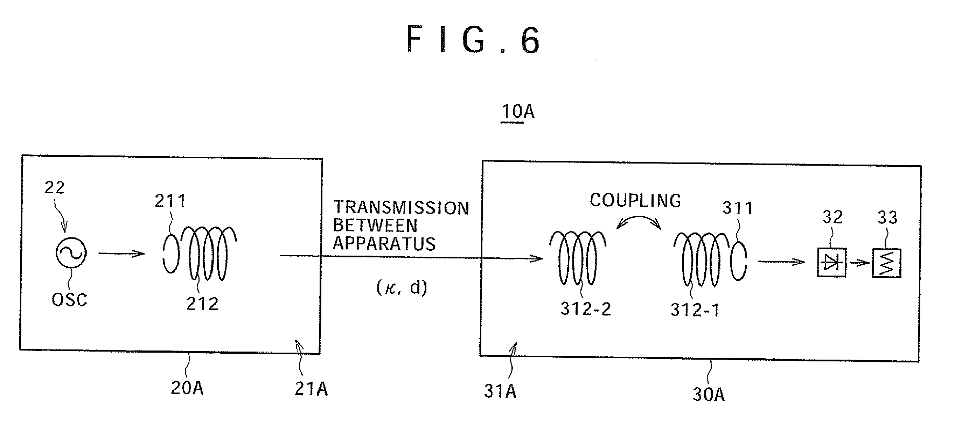

FIG. 6 shows an example of a configuration of a wireless power supplying system according to a second embodiment of the present invention.

The wireless power supplying system 10A according to the present second embodiment is similar to but different from the wireless power supplying system 10 according to the first embodiment in that the resonance coil which forms the resonator MX1 at the intermediate stage is disposed not on the power supplying apparatus 20A side but on the power receiving apparatus 30A side.

In particular, the power transmission coil section 21A of the power supplying apparatus 20A includes a power supplying coil 211 and a single resonance coil 21.2.

Meanwhile, the power receiving apparatus 30A includes a power reception coil section 31A formed from a power supplying coil 311 and a plurality of resonance coils 312-1 and 312-2 as resonance elements coupled to each other at multiple stages.

The resonance coil 312-1 and the resonance coil 312-2 are coupled to each other through a magnetic field resonance relationship, and the resonance coil 312-2 functions as the resonator MX1 at an intermediate stage.

The resonance coil 312-1 functions as the resonator RX1 and is formed from an air-core coil to be coupled to the power supplying coil 311 through electromagnetic induction.

The resonance coil 312-2 establishes a magnetic field resonance relationship with the resonance coil 212 of the power supplying apparatus 20 when the self resonance frequencies of them substantially coincide with each other. The resonance coil 312-2 receives power efficiently when the magnetic field resonance relationship is established.

Equivalent blocks and an equivalent circuit of the wireless power supplying system 10A according to the present second embodiment are similar to those of the wireless power supplying system 10 according to the first embodiment described hereinabove with reference to FIGS. 2 and 3, respectively.

On the power supplying apparatus 20 side, AC power generated by the oscillator OSC of the high frequency power generation section 22 is supplied to the power supplying coil 211 and then transmitted to the resonance coil 212 through the power supplying coil 211 by coupling by electromagnetic induction.

In this instance, since the resonator TX1 and the power supplying or coupling coil 211 are coupled in induction coupling, they function as a transformer T1 simultaneously with transmission of a signal to carry out impedance conversion or transformer operation.

The power supplying or coupling coil 211 is connected to an output of the oscillator OSC such that it is driven by the oscillator OSC to excite the power supplying side resonator TX1.

An induced magnetic field formed by the coil is generated around the excited power supplying side resonator TX1. Since the intermediate stage resonator MX1 on the power reception side is disposed in the proximity of the power supplying side resonator TX1, the induced magnetic field is picked up by the power receiving apparatus 30. Consequently, energy is transmitted to the resonance coil 312-2.

Consequently, the resonator MX1 at the intermediate state is exited, and an induced magnetic field formed by the coil is generated around the resonator MX1.

Then, the resonance coil 312-2 and the resonance coil 312-1 are coupled to each other through a magnetic field resonance relationship, and power of the resonance coil 312-2 is transmitted to the resonance coil 312-1.

Consequently, power induced in the resonator RX1 formed from the resonance coil 312-1 is transmitted to the power supplying or coupling coil 311 similarly as in the power supplying apparatus 20, and high frequency power is finally converted into DC power by the rectification circuit 32.

By inserting the resonator MX1 at an intermediate stage between the resonator TX1 of the power supplying apparatus 20A and the resonator RX1 of the power receiving apparatus 30A to allow multi-state transmission, the frequency band can be adjusted, and by carrying out suitable design, a 5 wideband can be anticipated.

In the wireless power supplying system 10A according to the present second embodiment, the resonator MX1 at the intermediate stage is disposed on the power receiving apparatus 30A side.

### <3. Third Embodiment>

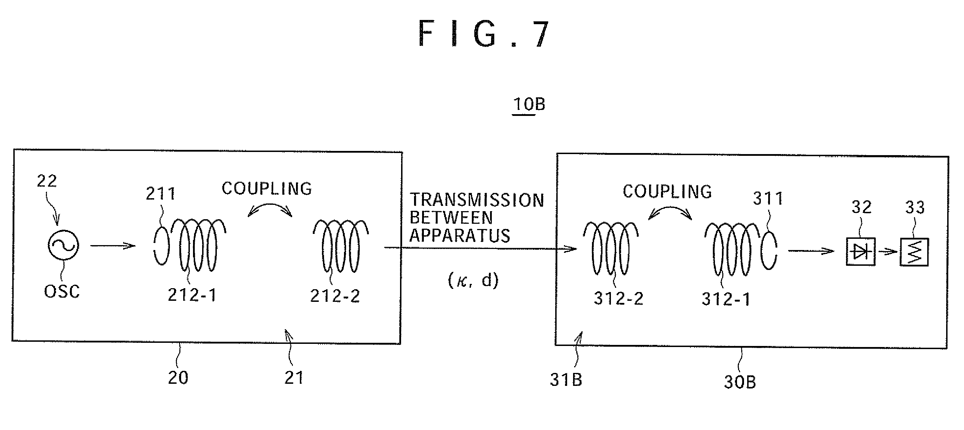

10 FIG. 7 shows an example of a configuration of a wireless power supplying system according to a third embodiment of the present invention.

The wireless power supplying system 10B according to the present third embodiment is similar to but different from the wireless power supplying system 10 according to the first embodiment in that the resonance coil which forms the resonator MX1 at an intermediate stage is provided not only on the power supplying apparatus 20 side but also on the power receiving apparatus 30B side.

In particular, the power reception coil section 31B of the power receiving apparatus 30B includes a power supplying coil 311, and a plurality of resonance coils 312-1 and 312-2 as resonance elements coupled at multiple stages.

The resonance coil 312-1 and the resonance coil 312-2 are coupled to each other through a magnetic field resonance relationship, and the resonance coil 312-2 functions as the resonator MX2 at an intermediate stage.

The resonance coil 312-1 functions as the resonator RX1 and is formed from an air-core coil to be coupled to the power supplying coil 311 through electromagnetic induction.

The resonance coil 312-2 establishes a magnetic field resonance relationship with the resonance coil 212-2 of the power supplying apparatus 20 when the self resonance frequencies of them substantially coincide with each other, The resonance coil 312-2 receives power efficiently when the magnetic field resonance relationship is established.

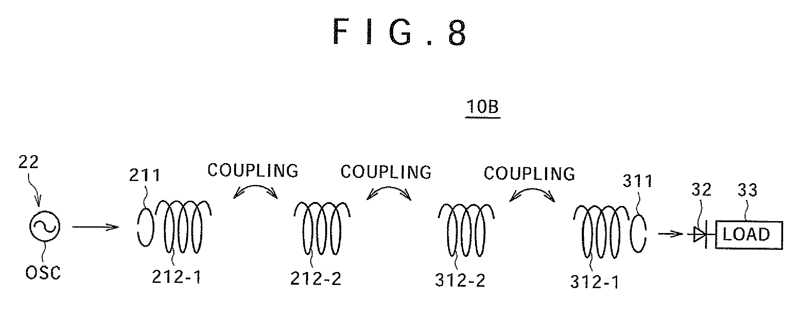

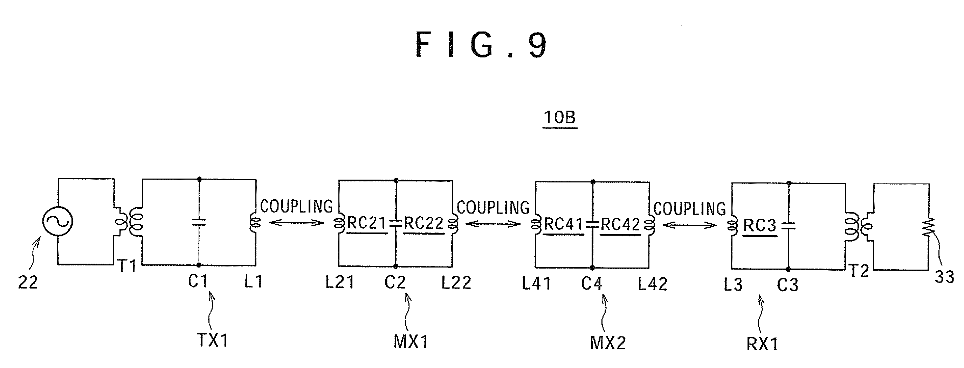

FIG. 8 illustrates equivalent blocks of the wireless power supplying system according to the present third embodiment, and FIG. 9 shows an equivalent circuit of the wireless power supplying system of FIG. 8.

Referring to FIGS. 8 and 9, the power supplying side resonator TX1 includes a resonance circuit RC1 formed from a coil L1 and floating capacitance of the coil L1 or from the coil L1 and a capacitor C1 connected in parallel to the coil L1.

Similarly, the resonator MX1 at an intermediate stage includes a first resonance circuit RC21 formed equivalently from a coil L21 and floating capacitance of the coil L21 or from the coil L21 and a capacitor C2 connected in parallel to the coil L21.

Further, the resonator MX1 at an intermediate stage includes a second resonance circuit RC22 formed equivalently from a coil L22 and floating capacitance of the coil L22 or from the coil L22 and the capacitor C2 connected in parallel to the coil L22.

Similarly, the resonator MX2 at an intermediate stage includes a first resonance circuit RC41 formed equivalently from a coil L41 and floating capacitance of the coil L41 or from the coil L41 and a capacitor C4 connected in parallel to the coil L41.

Further, the resonator MX2 at an intermediate stage includes a second resonance circuit RC42 formed equivalently from a coil L42 and floating capacitance of the coil L42 or from the coil L42 and the capacitor C4 connected in parallel to the coil L42.

The power receiving side resonator RX1 includes a resonance circuit RC3 formed from a coil L3 and floating capacitance of the coil L3 or from the coil L3 and a capacitor C3 connected in parallel to the coil L3.

In this manner, the wireless power supplying system 10B according to the present third embodiment is configured including the four resonators TX1, MX1, MX2 and RX1.

On the power supplying apparatus 20 side, AC power generated by the oscillator OSC of the high frequency power generation section 22 is supplied to the power supplying coil 211 and then transmitted to the resonance coil 212-1 through the power supplying coil 211 by coupling by electromagnetic induction.

The resonance coil 212-1 and the resonance coil 212-2 are coupled to each other in a magnetic field resonance relationship such that power of the resonance coil 212-1 is supplied to the resonance coil 212-2.

In this instance, since the power supplying side resonator TX1 and the power supplying or coupling coil 211 are coupled in induction coupling, they function as a transformer T1 simultaneously with transmission of a signal to carry out impedance conversion or transformer operation.

The power supplying or coupling coil 211 is connected to an output of the oscillator OSC such that it is driven by the oscillator OSC to excite the power supplying side resonator TX1.

An induced magnetic field formed by the coil is generated around the excited resonator TX1, and the resonator MX1 disposed adjacent the next stage, that is, adjacent the intermediate stage, picks up the induced magnetic field. Consequently, energy is transmitted.

Consequently, the resonator MX1 at the intermediate stage is excited, and an induced magnetic field formed by the coil is generated around the resonator MX1.

Since the resonance coil 312-2 which forms the resonator MX2 on the power reception side is disposed in the neighborhood of the resonator MX1 at the intermediate state, for example, at a distance of several tens cm to the resonator MX1, the power receiving apparatus 30 picks up the induced magnetic field. Consequently, energy is transmitted.

In other words, the induced magnetic field is picked up by the power receiving apparatus 30 to transmit the energy to the resonance coil 312-2.

Consequently, the resonator MX2 at the intermediate stage is excited, and an induced magnetic field formed by the coil is generated around the resonator MX2.

Then, the resonance coil 312-2 and the resonance coil 312-1 are coupled to each other through a magnetic field resonance relationship, and power of the resonance coil 312-2 is transmitted to the resonance coil 312-1.

Consequently, the power excited in the resonator RX1 formed from the resonance coil 312-1 is transmitted to the power supplying or coupling coil 311 similarly as in the power supplying apparatus 20. Consequently, high frequency power is finally converted into DC power by the rectification circuit 32.

By inserting the resonators MX1 and MX2 at an intermediate stage between the resonator TX1 of the power supplying apparatus 20 and the resonator RX1 of the power receiving apparatus 30B to allow multi-state transmission, the frequency band can be adjusted, and by carrying out suitable design, a wideband can be anticipated.

In the wireless power supplying system 10B according to the present third embodiment, the resonators MX1 and MX2 at the intermediate stage are disposed on the power supplying apparatus 20 side and the power receiving apparatus 308 side, respectively.

It is to be noted here that, although an example of the number of multiple stages up to four resonators is described, also it is possible to increase the number of stages. This can achieve a further increase of the wideband.

However, where the number of stages of resonators increases, the total thermal loss generated by the resistance which the stages have increases, resulting in drop of the transmission efficiency. Thus, it is necessary to take the drop of the transmission efficiency and the possibility of complication in design into consideration, and it is necessary to select a stage number suitable for the system.

As described above, with the present embodiment, the following advantages can be achieved.

In particular, with the present embodiment, achievement of a wider band can be achieved while a high performance, that is, a high Q value, of resonators which is essentially demanded for implementation of a long transmission distance of a magnetic field resonance type wireless power supplying system, is maintained.

Even if the frequency of a carrier is displaced, a drop of the transmission efficiency can be prevented. Accordingly, the frequency accuracy of an oscillator in a transmitter may be low. Further, the wireless power supplying system is not influenced by frequency variation by a temperature variation or a power supply variation.

Although the resonance frequency of a resonator varies depending upon environmental circumstances or variation of a parameter of a connected circuit, since the frequency band is wide, the wireless power supplying system is not influenced by the variations.

In electric power transmission, a very high power which cannot be compared with that in communication is handled. Thereupon, no disturbance should be applied to a communication terminal or a receiver positioned in the neighborhood. In such a case that disturbance by interference is applied, such a countermeasure as to quickly change the frequency to a different frequency is demanded. Since thereupon the present embodiment maintains a wide band transmission characteristic, also where the carrier frequency is to be changed, no alteration is demanded regarding the transmission section configured from a resonator. Therefore, it is easy to take a suitable countermeasure against interference.

Also in magnetic field resonance type power transmission, it is possible to superpose data by modulating a carrier. However, in order to send data at a high rate without lowering the noise resisting property, a corresponding wider band is demanded. With the present embodiment, since the wireless power supplying system of the present embodiment has a wide band while it is of the magnetic field resonance type, also superposition of data can be carried out readily.

If the number of stages of resonators is increased to four or more, further widening of the band can be anticipated.

The present application contains subject matter related to that disclosed in Japanese Priority Patent Application JP 2010-011128 filed in the Japan Patent Office on January 21, 2010.

It should be understood by those skilled in the art that various modifications, combinations, sub-combinations and alterations may occur depending on design requirements and other factors insofar as they are within the scope of the appended claims or the equivalents thereof.

## Claims

1. A power supplying apparatus, comprising:
a power generation section adapted to generate power to be supplied;
a power supplying element adapted to receive the power generated by and supplied thereto from said power generation section; and
a plurality of resonance elements disposed at multiple stages and adapted to couple to each other through a magnetic field resonance relationship;
one of said resonance elements being coupled to said power supplying element through electromagnetic induction.

2. A power receiving apparatus, comprising:
a plurality of resonance elements disposed at multiple stages and adapted to couple to each other through a magnetic field resonance relationship; and
a power supplying element adapted to couple to said resonance elements through electromagnetic induction and receive received power from said resonance elements;
one of said resonance elements receiving power transmitted thereto through a magnetic field resonance relationship while another one of said resonance elements is coupled to said power supplying element through electromagnetic induction.

3. A wireless power supplying system, comprising:
a power supplying apparatus; and
a power receiving apparatus adapted to receive a transmission signal including power transmitted thereto from said power supplying apparatus through a magnetic field resonance relationship;
said power supplying apparatus including
a power generation section adapted to generate power to be supplied,
a power supplying element adapted to receive the power generated by and supplied thereto from said power generation section, and
at least one resonance element adapted to couple to said power supplying elements through electromagnetic induction,
said power receiving apparatus including
a resonance element adapted to receive power transmitted from said power supplying apparatus through a magnetic field resonance relationship, and
a power supplying element adapted to couple to said resonance elements through electromagnetic induction and receive received power from said resonance element,
at least one of said power supplying apparatus and said power reception apparatus including a plurality of resonance elements disposed at multiple stages and coupled to each other through a magnetic field resonance relationship.

4. The wireless power supplying system according to claim 3, wherein said power supplying apparatus includes a plurality of resonance elements disposed at multiple stages and coupled to each other through a magnetic field resonance relationship, and
one of said resonance elements is coupled to said power supplying element through electromagnetic induction.

5. The wireless power supplying system according to claim 3, wherein said power receiving apparatus includes a plurality of resonance elements disposed at multiple stages and coupled to each other through a magnetic field resonance relationship, and
one of said resonance elements receives power transmitted thereto through a magnetic field resonance relationship while another one of said resonance elements is coupled to said power supplying element through electromagnetic induction.

6. The wireless power supplying system according to claim 3, wherein said power supplying apparatus includes a plurality of resonance elements disposed at multiple stages and coupled to each other through a magnetic field resonance relationship, and
one of said resonance elements is coupled to said power supplying element through electromagnetic induction; and
said power receiving apparatus includes a plurality of resonance elements disposed at multiple stages and coupled to each other through a magnetic field resonance relationship, and
one of said resonance elements receives power transmitted thereto through a magnetic field resonance relationship while another one of said resonance elements is coupled to said power supplying element through electromagnetic induction.
